# EUROPÄISCHE PATENTSCHRIFT

(11) **EP 0 398 023 B1**
(45) Veröffentlichungstag und Bekanntmachung des Hinweises auf die Patenterteilung: **22.09.1993**
(21) Anmeldenummer: 90107163.9
(22) Anmeldetag: 14.04.1990
(51) Int. Cl.: E04D 11/02, B29C 67/24

(54) **Drainageelement in Plattenform zum Einbau unter feuchtigkeitsbelastete Fussböden**
Drainage element in panel form for installation under moisture loaded floors
Elément de drainage en forme de panneau pour l'installation sous les planchers chargés d'humidité

(30) Priorität: 18.05.1989 DE 3916249
(43) Veröffentlichungstag der Anmeldung: 22.11.1990
(73) Patentinhaber: HMW FUGENTECHNIK-VERTRIEB Marianne Reher-Wedi, 48282 Emsdetten (DE)
(72) Erfinder: Reher-Wedi, Marianne, D-4407 Emsdetten (DE)
(74) Vertreter: Hoffmeister, Helmut, Dr. Dipl.-Phys.

(56) Entgegenhaltungen:
- CH-A- 499 577
- CH-A- 530 530
- CH-A- 601 607
- CH-A- 634 626
- DE-A- 2 327 618
- DE-A- 2 921 642
- FR-A- 2 235 779
- US-A- 3 690 227

## Beschreibung

Die Erfindung betrifft ein Drainageelement in Plattenform zum Einbau unter feuchtigkeitsbelastete Fußböden in Gestalt eines Formkörpers aus einem agglomerierten Gefüge, bestehend aus
- einzelnen Kunststoff-Hartschaum-Körpern, die aus thermoplastischen Schaumstoffen, z. B. Schaumstoffen aus Polystyrol, Polyvinylchlorid oder dergleichen hergestellt sind, und
- einem sie umgebenden Bindemittel,
- die zusammen vor der Agglomeration schüttfähig sind.

Aus der CH-A-499 577 ist ein schüttfähiges Schaumkunststoffgranulat, dessen Teilchen von einem nicht-klebrigen Überzug umhüllt sind, bekannt. Die Teilchen können dabei die Form von Kügelchen, Linsen oder andere geometrische Formen haben. Das Umhüllungsmaterial besteht aus oder enthält einen Kunststoff. Er ist ein duroplastisch haltbarer Kunststoff oder ein hochschmelzender Thermoplast. Dieses Material schmilzt bei hohen Temperaturen. Dadurch ist es möglich, Formteile, Platten und Blöcke herzustellen oder Vergießungen vorzunehmen.

Allerdings sollen diese Formkörper nur als thermisch oder akustisch isolierendes Material oder als schüttfähiges Schaumstoffgranulat für das Ausfüllen von Hohlräumen verwendet werden.

Bekannt ist, Drainageelemente, die im wesentlichen als eine Art Kunststoffmatte gebildet sind, unter Plattenbelägen, insbesondere auf Balkonen und Terrassen anzuordnen. Beispielsweise sind Kunststoff-Matten mit strukturierten Oberflächen bekannt. Diese Elemente dienen dazu, das durch Fugen oder Risse eines Plattenbelages eingesickerte Wasser abzuleiten, um Schäden am Plattenbelag selbst wie auch vor allem an seiner Unterkonstruktion, z.B. einer Estrichlage, durch Frostsprengung oder chemische Zersetzung zu verhindern.

Solche Drainageelemente liegen demnach auf einer Estrichlage auf und erhöhen deren Bauhöhe. Es ergibt sich daher immer das Problem, eine wirksame Höhe für die Drainageelemente vorzusehen, so daß Wasserabführung und Unterlüftung in technisch ausreichendem Maße gegeben sind.

Es stellt sich demnach die Aufgabe, die bekannten Drainageelemente dahingehend zu verbessern, daß diese nicht nur die Aufgabe bekannter Drainagematten, sondern auch die eines Estrichs, jedenfalls über eine gewisse Höhe, übernehmen, ohne daß die übrigen erforderlichen Eigenschaften nachteilig beeinflußt werden.

Die Aufgabe wird mit einem Formkörper aus einem agglomerierten Gefüge, bestehend aus einzelnen Kunststoff-Hartschaum-Körpern, die aus thermoplastischen Schaumstoffen, z. B. Schaumstoffen aus Polystyrol, Polyvinylchlorid oder dergleichen hergestellt sind, und einem sie umgebenden Bindemittel, die zusammen vor der Agglomeration schüttfähig sind, dadurch gelöst, daß bei einer Verwendung des Formkörpers als Drainageelement den Kunststoff- Hartschaum-Körpern ein zementgefüllter, aushärtbarer Kunstharzmörtel als Bindemittel zugesetzt ist, der im ausgehärteten Zustand eine die Kunststoff-Hartschaum-Körper verbindende Matrix bildet.

Es zeigt sich, daß ein derartiges Drainageelement geeignet ist, hohe Druckbelastungen aufzunehmen und gleichzeitig die Feuchtigkeit entweder kapillar abzuleiten oder aber auf eine wasserundurchlässige Unterschicht hindurchzuführen. Außerdem ist das Drainageelement relativ leicht, jedenfalls leichter als übliche, kompakte Estrichschichten. Darüberhinaus besitzt das Drainageelement eine hohe Wärmeisolation und kann daher auch mit Vorzug in Kühlräume und dergleichen eingesetzt werden. Die Frostbeständigkeit ist ebenfalls groß, da die Ausdehnungsfähigkeit des Wassers kleiner ist als die Elastizität des agglomerierten Gefüges.

Die Drainageelemente können in ungeschützter, aber auch in einer Form hergestellt werden, so daß an deren Ecken und Kanten Kunststoffprofile fluchtend angesetzt sind, so daß eine saubere Kantenausbildung gegeben ist. Es ist außerdem möglich, die Elemente durch eingelegte Armierungsgewebe zu verstärken.

Als Kunstharzmörtel empfiehlt sich ein solcher, dessen Zement-Silikatgehalt, im erhärteten Zustand, wenigstens 30 Gew.-% beträgt. Dabei sollte der Volumenanteil des Hart-Schaumstoffes an dem Gesamtvolumen des Elementes zwischen 70 und 90 % betragen. Der Außendurchmesser der Füllkörper sollte zwischen 5 und 50 mm liegen.

Bei dem Bindemittel bzw. dem Kunstharzmörtel, der die Matrix bildet, wird vorzugsweise auf ein Kunstharzmörtel zurückgegriffen, der auf Epoxidharz-Basis hergestellt ist. Es ist jedoch auch möglich, hier auf einen Polyurethan-Kunststoff zurückzugreifen.

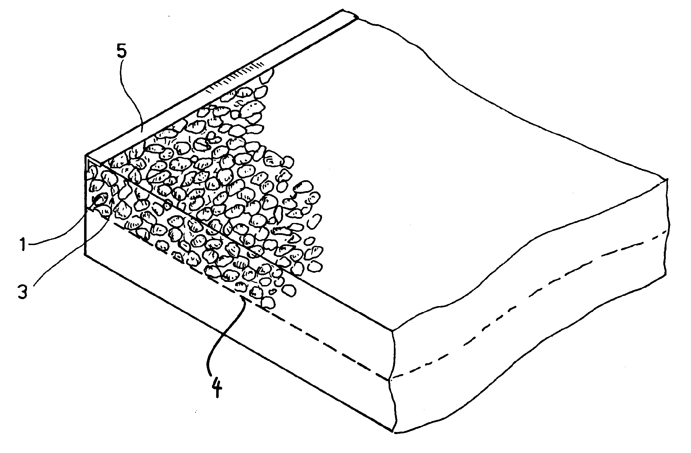

Ein Ausführungsbeispiel der Erfindung ist in der Zeichnung dargestellt. Die Figur zeigt im Anschnitt und perspektivisch ein Drainageelement. Bei dem Drainageelement sind im Anschnittsbereich einzelne Körperchen 1 aus Hartschaumstoff geschnitten, die von einer Matrix 3 aus ausgehärtetem, zementgefülltem Kunststoffmörtel umgeben sind.

Als Hartschaumstoffe eignen sich solche aus der Gruppe der nach DIN 7726 sogenannten harten Schaumstoffe, deren Grundstoffe sein können: Polymethacrylemid, Phenol-Formaldehydharze, Harnstoffharze, PVC, Polystyrol, Phenolharze und Polyurethane. Im wesentlichen sollte der Schaumstoff im Inneren mit dem umgebenden Mantel aus Kunststoffmörtel kompatibel sein, so daß auch hier eine innige und homogene Verbindung und Matrixbildung eintritt. Für die Fertigung der Füllkörperkerne können auch extrudierte Schäume Verwendung finden. Die Kunststoff-Hartschaum-Körper 1 haben eine polyedrische, vorzugsweise kugelige Form; ihr Außendurchmesser liegt zwischen 5 und 50 mm. Hergestellt wird das Drainageelement, in dem die Kunststoff-Hartschaum-körper 1dem nicht-ausgehärtetem Bindemittel zugesetzt werden und die aus Kunststoff-Hartschaum-Körpern 1und Bindemittel bestehende Masse in eine Form oder Schalung gegossen wird, daß gegebenenfalls vorher eine Armierung oder Schutzteile eingelegt werden und daß das Bindemittel zum Aushärten gebracht wird. Dabei kann der entstehende Beschichtungsmantel, der gleichzeitig die Matrix 3bildet, je nach dem vorgesehenen Verwendungszweck für die Schüttung der Kunststoff-Hartschaum-Körper 1 durch die entsprechende Auswahl der verwendeten Materialien starr oder mehr flexibel gewählt werden. Immer jedoch liegt die Shore-Härte (A) des ausgehärteten Beschichtungsmantels um einige Grade über der Härte des Hart-Schaumstoffkernes.

Die Matrix 3 bildet keine kompakte Masse, sondern ein Gefüge mit Hohlkörpern, Kapillaren, Öffnungen und Höhlungen, so daß ein auf die Oberfläche fallender Wassertropfen ohne weiteres aufgenommen und bei größeren Wasseransammlungen auch hindurchgeleitet wird. Das Wasseraufnahme- und durchlassungsvermögen des Drainageelementes ist dabei erstaunlich hoch. Zusätzlich kann auch noch eine Armierungsmatte 4 angebracht sein. An den Ecken sind vorzugsweise Kunststoff-Winkelelemente 5 vorgesehen, die die Ecken schützen und das Element insgesamt noch versteifen. Die Drainageelemente halten ein hohes Belastungsgewicht aus und verbinden sich ausgezeichnet mit anderen Baustoffen, wie Klebern, Zementdispersionen und dergleichen, soweit dies erforderlich ist. Die Wärmeisolations- und Gewichtseigenschaften sind optimal für den hier angegebenen Zweck.

Die Körper sind wegen der verwendeten außenseitigen Beschichtung auch im allgemeinen schwer entflammbar und können sogar als "nicht brennbar" i.S. der amtlichen Klassifikation eingeordnet werden.

Als Bindemittel eignen sich beispielsweise betongefüllte Kunstharze, aber auch zementgefüllte Bitumina. Alle diese Stoffe verbinden sich mit der rauhen und porenreichen Oberfläche der Kunststoffkörperchen 1 sehr gut und bilden eine innig verbundene Matrix und Masse.

## Patentansprüche

1. Formkörper aus einem agglomerierten Gefüge, bestehend aus
- einzelnen Kunststoff-Hartschaum-Körpern (1), die aus thermoplastischen Schaumstoffen, z. B. Schaumstoffen aus Polystyrol, Polyvinylchlorid oder dergleichen hergestellt sind, und
- einem sie umgebenden Bindemittel,
- die zusammen vor der Agglomeration schüttfähig sind,
dadurch gekennzeichnet, daß bei einer Verwendung des Formkörpers als Drainageelement den Kunststoff-Hartschaum-Körpern (1) ein zementgefüllter, aushärtbarer Kunstharzmörtel als Bindemittel zugesetzt ist, der im ausgehärteten Zustand eine die Kunststoff-Hartschaum-Körper (1) verbindende Matrix (3) bildet.

2. Drainageelement nach Anspruch 1, dadurch gekennzeichnet, daß an den Ecken und Kanten der Elemente Kunststoffprofile (5) angesetzt sind.

3. Drainageelement nach Anspruch 1 oder 2, dadurch gekennzeichnet, daß die Elemente durch eingelegte Armierungsgewebe verstärkt sind.

4. Drainageelement nach einem der Ansprüche 1 bis 3, dadurch gekennzeichnet, daß der die Matrix (3) bildende zementgefüllte Kunststoffmörtel wenigstens einen Zement-Silikat-Gehalt (im erhärteten Zustand) von 30 Gew.-% enthält.

5. Drainageelement nach einem der Ansprüche 1 bis 4, dadurch gekennzeichnet, daß der Volumenanteil der Kunststoff-Hartschaum-Körper (1) an dem Gesamtvolumen des Elementes zwischen 70 und 90 % beträgt.

6. Drainageelement nach einem der Ansprüche 1 bis 5, dadurch gekennzeichnet, daß der Außendurchmesser der Kunstoff-Hartschaum-Körper (1) zwischen 5 und 50 mm liegt.

7. Drainageelement nach einem der Ansprüche 1 bis 6, dadurch gekennzeichnet, daß die Matrix (3) aus einem auf Epoxid-Basis hergestellten, gefüllten Kunstharzmörtel besteht.

8. Drainageelement nach einem der Ansprüche 1 bis 7, dadurch gekennzeichnet, daß die Matrix (3) aus einem auf Polyurethan-Basis hergestellten, gefüllten Kunstharz besteht.

## Claims

1. Moulded members made from an agglomerated structure, comprising individual plastics rigid foam members (1) made of cellular thermoplastics, e.g. from polystyrene, polyvinyl chloride or the like, and a binder surrounding them, the materials being free-flowing together before agglomeration, characterised in that when the moulded member is used as a drainage element, a binder in the form of a cement-filled thermosetting synthetic resin mortar is added to the plastics rigid foam members (1) and after thermosetting forms a matrix (3) which bonds the plastics rigid foam member (1).

2. A drainage element according to claim 1, characterised in that plastics section members (5) are disposed at the corners and edges of the elements.

3. A drainage element according to claim 1 or 2, characterised in that the elements are strengthened by inserte reinforcing fabric.

4. A drainage element according to any of claims 1 to 3, characterised in that the cement-filled plastics mortar forming the matrix (3) has a cement-silicate content (when solidified) of at least 30% by weight.

5. A drainage element according to any of claims 1 to 4, characterised in that the plastics rigid foam members (1) make up 70 to 90% of the total volume of the element.

6. A drainage element according to any of claims 1 to 5, characterised in that the outer diameter of the plastics rigid foam members (1) is between 5 and 50 mm.

7. A drainage element according to any of claims 1 to 6, characterised in that the matrix (3) is of filled synthetic mortar manufactured on an epoxy basis.

8. A drainage element according to any of claims 1 to 7, characterised in that the matrix (3) is of filled synthetic resin manufactured on a polyurethane basis.

## Revendications

1. Corps de forme constitué d'une structure agglomérée, se composant:
- de corps individuels en mousse rigide de matière plastique (1), qui sont fabriqués à partir de produits alvéolaires thermoplastiques, par exemple des produits alvéolaires de polystyrène, de chlorure de polyvinyle, ou similaires et
- d'un liant qui les entoure,
- qui sont susceptibles, avant l'agglomération, de s'écouler ensemble,
caractérisé en ce qu'il est ajouté comme liant aux corps en mousse rigide de matière plastique (1), lors de l'utilisation du corps de forme comme élément de drainage, un mortier durcissable en résine synthétique chargé en ciment, qui constitue dans l'état durci une matrice (3) liant les corps en mousse rigide de matière plastique (1).

2. Elément de drainage selon la revendication 1, caractérisé en ce que des profilés en matière plastique (5) sont appliqués aux coins et aux arêtes des éléments.

3. Elément de drainage selon la revendication 1 ou 2, caractérisé en ce que les éléments sont renforcés par un tissu d'armature inséré.

4. Elément de drainage selon l'une des revendications 1 à 3, caractérisé en ce que le mortier de matière plastique chargé en ciment constituant la matrice (3) contient au moins (à l'état durci) une teneur de 30% en poids de silicate inclus dans le ciment.

5. Elément de drainage selon l'une des revendications 1 à 4, caractérisé en ce que la fraction volumique des corps en mousse rigide de matière plastique (1) constitue 70 à 90% du volume total de l'élément.

6. Elément de drainage selon l'une des revendications 1 à 5, caractérisé en ce que le diamètre extérieur des corps en mousse rigide de matière plastique (1) est compris entre 5 et 50 mm.

7. Elément de drainage selon l'une des revendications 1 à 6, caractérisé en ce que la matrice (3) se compose d'un mortier de matière plastique chargé, fabriqué à base de résine époxy.

8. Elément de drainage selon l'une des revendications 1 à 7, caractérisé en ce que la matrice (3) se compose d'une matière plastique chargée, fabriquée à base de polyuréthanne.
